# EUROPEAN PATENT SPECIFICATION

(11) **EP 2 534 034 B1**
(45) Date of publication and mention of the grant of the patent: **02.06.2021**
(21) Application number: 11705837.0
(22) Date of filing: 09.02.2011
(51) Int. Cl.: B62J 43/13, B62J 43/20, B62K 19/40, B62J 13/04, B62M 6/90, B62M 6/60

(54) **POWER-SOURCE PLACEMENT ON ELECTRICALLY MOTORISED BICYCLE**
ENERGIEQUELLENPLATZIERUNG AN EINEM ELEKTRISCH BETRIEBENEN FAHRRAD
MISE EN PLACE D'UNE ALIMENTATION ÉLECTRIQUE SUR UNE BICYCLETTE À MOTEUR ÉLECTRIQUE

(30) Priority: 09.02.2010 EP 10153089
(43) Date of publication of application: 19.12.2012
(73) Proprietor: Pro-Movec A/S, 8250 Egå (DK)
(72) Inventor: RASMUSSEN, Jan, DK-8210 Århus (DK)
(74) Representative: Budde Schou A/S
(86) International application number: PCT/EP2011/051906
(87) International publication number: WO 2011/098492

(56) References cited:
- EP-A1- 0 846 614
- EP-A2- 1 445 186
- WO-A2-2008/039263
- CN-A- 1 201 875
- DE-U1- 8 111 271
- DE-U1-202004 004 726
- JP-A- 8 207 876
- JP-A- H08 108 875
- JP-A- 2002 037 162
- US-A- 2 457 430
- US-A- 4 280 581

## Description

The present invention is defined by the appended claims and generally relates to motorised bicycles powered by electrical motors. More specifically, the present invention relates to the battery packs for the electrical motors, and in particular to the positioning of the battery cells of the battery packs.

A motorised bicycle is a bicycle having a motor for powering the vehicle, or for assisting the pedalling. The motor is either attached to the bicycle during its construction, or after its construction as an after-market conversion. The motorised bicycles are distinguished from motorcycles by being capable of being powered by pedals alone. Some of the motorised bicycles have the pedals as the main form of propulsion, with the motor for giving extra power, e.g. when going uphill, while other motorised bicycles can be driven by their respective motor alone.

Many motorised bicycles are based on standard bicycle frames, e.g. they have a standard frame with a seat tube, down tube, head tube, seat stay and chain stay. It is also common to have a top tube interconnecting the upper end of the seat tube and the head tube. Standard bicycle technologies are also commonly used, such as breaks and gears. There are also technologies specific for motorised bicycles, such as torque sensors and power controls for controlling the assisting of the pedalling. The motorised bicycles may be powered by different types of engines. The most common engines are electrical motors, e.g. positioned at the crank or at the centre of either the front or the rear wheel, powered by a battery or battery pack supported by the bicycle frame. The battery packs are commonly positioned between the seat tube and the rear wheel; in the triangle between the seat, the top, and down tubes; between the luggage carrier and the rear wheel; beside the rear wheel and hanging from the luggage carrier, or within or as a part of the seat, top, and the down tubes.

A battery pack has a certain weight and its placing on the motorised bicycle influences the balance of the bicycle. A high positioned battery pack, e.g. between the saddle tube and the rear wheel or between the luggage carrier and the rear wheel, results in a high centre-of-gravity of the motorised bicycle. This has the disadvantage that the motorised bicycle is less stable when driving. Further, it also has the disadvantage that the motorised bicycle is harder to rise from a position on its side to an upright position. If the battery pack is part of an after-market conversion, the mounting of the battery, e.g. hanging on the side from the luggage carrier, can even shift the centre-of-gravity upward as compared to the non-converted bicycle.

JP2002037162A is one example of a power-assisted bicycle having a battery pack arranged in a low gravity position of the bicycle. The Battery pack may be located on the saddle tube or on the left chain stay.

CN 1201875 A discloses a motorised bicycle according to the preamble of claim 1.

The battery packs of the after-market conversions, including the above mentioned, are not an integral part of the motorised bicycle, but are positioned somewhere on the frame or the luggage carrier, which means that the bicycle cannot be handled or carried as an ordinary bicycle, e.g. when being hung onto a tow-bar support having arms engaging the frame from its side. Further, the after-market conversions have certain requirements on the frame or luggage carrier for allowing an attachment thereto. For example, a bicycle lacking a luggage carrier cannot be fitted with an after-market conversion having a battery pack adapted to be mounted on the luggage carrier, or adapted to hang down from the luggage carrier on one side of the rear wheel. Further, for an electrical rear-wheel hub-motor, the positioning of the battery package between the saddle tube and the rear wheel, between luggage carrier and the rear wheel, or as an integral part of the luggage carrier, requires an electrical conduit that is larger than the radius of the rear wheel to connect the battery pack and the hub motor. Naturally, a battery pack adapted to hang down from the luggage carrier on one side of the rear wheel, requires a shorter electrical conduit, as it is closer to the hub of the rear-wheel hub-motor. Built-in battery packs of motorised bicycles usually require a significant adaption of the bicycle and change of the bicycle profile as compared to that of an ordinary bicycle. For example, when placing the battery pack inside the down tube, this requires the down tube to have a significantly larger diameter than the required diameter of an ordinary bicycle.

An object according to the present invention is to provide a motorised bicycle that is easy to handle, e.g. when driving or carrying the bicycle, or when recharging or replacing the battery pack. A particular feature of the present invention is a low positioning of the battery pack, which has the advantage that the motorised bicycle is easier to put in upright position and balance. Another feature of the present invention is a positioning of the battery that has little influence on the profile or silhouette of the motorised bicycle when viewed from any direction, as compared to the corresponding profile or silhouette of a non-motorised bicycle, which allows the motorised bicycle to be handled as an ordinary bicycle. Another feature of the present invention is specific a positioning of a rotation sensor and a control unit.

In addition to the above objects, the above advantages and the above features, numerous other objects, advantages and features will be evident from the detailed descriptions given below of preferred embodiments according to the present invention. The objects, advantages and features are according to a first aspect of the present invention obtained by a motorised bicycle comprising an electric motor for at least partly powering the motorised bicycle , the motorised bicycle comprising: a frame, a rear wheel rotationally connected to the frame, a first sprocket rotationally connected to the frame, the first sprocket further being connected to a crank arm located on the same side of the frame as the first sprocket, a second sprocket spaced apart from the first sprocket and rotationally connected to the frame, the second sprocket further being connected to the rear wheel, and an endless chain or belt interconnecting the first and second sprockets in a loop for transferring power from the crank arm to the rear wheel; the drive unit comprising: a battery pack including one or more battery cells for providing the electrical motor with electrical energy, a battery pack support connecting the battery pack to the frame, the battery pack support and the battery pack positioning a battery cell of the one or more battery cells directly between the first and second sprockets and within the loop of the endless chain or belt, such that said battery cell is positioned on a point in space on a line segment going from a point on the first sprocket to a point on the second sprocket.

The frame, first sprocket and second sprocket may be that of an ordinary bicycle, and the drive unit may be adapted to be mounted as an after-market conversion. Alternatively, the frame, first sprocket and second sprocket may be adapted specifically for a motorised bicycle, with the drive unit mounted before reaching the market. The muscle power of the driver is transferred to the rear wheel, converting the reciprocal motion of the driver's foot to a rotational motion of the rear wheel. The electrical motor does not have to be connected to the rear wheel, e.g. it can be a hub motor mounted on the front wheel. Further the motor may be located at the first sprocket and connected thereto, or in the saddle tube with a planetary gear and drive axle connecting to the first sprocket.

The wording *between the first and second sprockets* should be understood as a point in space on a line segment going from a point on the first sprocket to a point on the second sprocket. This has the advantage of giving the motorised bicycle a low centre-of-gravity. Further, the specified positioning also has little influence on the handling of the motorised bicycle as compared to that of an ordinary bicycle, since the space between the first and second sprockets is rarely used when riding, carrying, or supporting a bicycle.

According to the invention the battery pack support and the battery pack are positioning the battery cell of the one or more battery cells directly between the first and second sprockets. The wording *directly between the first and second sprockets* should be understood as a point in space on a line segment going from a point on the first sprocket to a point on the second sprocket. This also has the effect that the battery cell is positioned close to the vertical centre of the bicycle frame, however with a slightly larger influence on the balance of the bicycle.

According to the invention the battery pack support and the battery pack are positioning the battery cell of the one or more battery cells directly within the loop of the endless chain or belt. The wording *directly within the loop of the endless chain or belt* should be understood as a point in space on a line segment going from a first point to a second point on the endless chain or belt. This particular positioning has even less influence on the handling of the motorised bicycle as compared to that of an ordinary bicycle.

The battery pack support and the battery pack may further be adapted for positioning the battery cell of the one or more battery cells proximal to the first sprocket and simultaneously allowing the crank arm to complete a full revolution. This positioning has the effect that the battery cell shifts the centre-of-gravity of the motorised bicycle forward, which may have a positive influence on the balance, in particular if the electrical motor is a rear-wheel hub-motor. Further, this particular positioning is rarely used by any other component of an ordinary bicycle, which means the battery cell can be readily positioned in an after-market conversion of most bicycles. This particular positioning also allows for more battery cells to be positioned close to the ground, both for an after-market conversion and for a pre-market installation.

The electrical motor may be positioned at the rear wheel. This has the effect that the distance between the battery pack and the electrical motor is small. Further, it allows for the battery pack support and the motor to be mounted in the same housing. The drive unit comprises an electrical connection for connecting the battery pack and the electrical motor. For example, the electrical connection may be an insulated electrical cable. Alternatively, the electrical motor may be positioned at the first sprocket or at a front wheel of the motorised bicycle.

The drive unit of the present invention may further comprise: a first electrical connector in electrical communication with the one or more battery cells and adapted for receiving electrical energy from an external source of electrical energy and a battery management unit for controlling a charging of the one or more battery cells by electrical energy from the electrical connector. The first electrical connector and the battery management unit may be located proximal to the battery pack and the battery cell of the one or more battery cells, which means that the added weight of these components may contribute to lower the centre-of-gravity of the motorised bicycle.

The first electrical connector and the battery management unit may be internal elements of the battery pack, which has the effect that it allows for the battery pack to be recharged even after it has been removed from the motorised bicycle. The first electrical connector and the battery management unit may then be located proximal to the battery cell of the one or more battery cells, which means that the added weight of these components contribute to lower the centre-of-gravity of the motorised bicycle, which may improve the handling of the motorised bicycle, e.g. when rising it from a laying to an upright position.

The battery management unit may further be adapted for controlling a discharge of electrical energy from the one or more battery cells to the electrical motor. For example, the battery management unit may control the discharge so that the battery pack delivers a constant power independent of the charge of the individual battery cells. This has the advantage of a stable powering of the motorised bicycle.

The drive unit of the present invention may further comprise: a rotation sensor for determining a rotation or non-rotation of the first sprocket and adapted for being positioned at the first sprocket, and on the opposite side of the sprocket from the crank arm. This has the effect that the rotation sensor is positioned at a low point and close to the vertical centre line of the upright motorised bicycle, and will therefore only have a small influence on the balance of the vehicle. Thus, this specific positioning of the rotation sensor has the advantage that the motorised bicycle is easier to handle. The rotation sensor may be positioned directly beside the first sprocket. The rotation sensor may be positioned at the hub of said first sprocket.

The rotation sensor may comprise: a permanent magnet, a magnet support for mounting the magnet in a fixed position relative to the first sprocket, and a magnet detector for being mounted in a fixed position relative to the frame and for detecting a change in position of the one or more magnets relative to the frame. This allows for a narrow construction of the rotation sensor, which makes it possible to bring its centre-of-gravity closer to the vertical centre line of the upright motorised bicycle, thus making its influence on the balance smaller. It also allows for the rotation sensor to be positioned in the commonly narrow space between the first sprocket and the frame. The magnet support being adapted for being mounted directly onto the first sprocket, which has the advantage that the rotation can be made even narrower. The rotation sensor may comprise an optical sensor, an electrical sensor, and/or a mechanical sensor as known in the art for detecting a rotation or non-rotation of the first sprocket or rotational axle to which the first sprocket is attached. The motorised bicycle may comprise: a rotational axle fixed to the first sprocket, and a bearing interconnecting the rotational axle and the frame for rotationally connecting the first sprocket to the frame, and the magnet support may be adapted for being rigidly mounted directly onto the rotational axle. This has the advantage that the same magnet support does not depend on the architecture of the first sprocket and it can be attached on different motorised bicycles with different first sprockets. The magnet support may be flat and defining a first aperture for allowing the rotational axle to pass through the magnet support. This allows for a magnet support that securely and accurately can be mounted on a wide range of rotational axles with varying transversal dimensions and cross-sectional shapes. The magnet support may be disc shaped or define a disc with the first aperture located at its geometric centre, and the magnet being located at the circumference of the disc. This has the advantage that the radial dimensions of the magnet support can be made small as compared to the spatial resolution defined by the magnet.

The magnet support may comprise a number of teeth directed towards the geometric centre of the first aperture for engaging and locking onto the rotational axle. The teeth may be flexible and the tips of the teeth may define a minimum area between them, and the minimum area may be smaller than the area of the cross-section of the rotational axle between the first sprocket and the frame. This has the advantage that the securing of the magnet support to the rotational axle requires only a small space in the axial direction of the rotational axle, thus allowing for narrow rotation sensor as a whole. The rotation sensor may be adapted for positioning the magnet detector at a point directly normal to the magnet support. Directly normal is here understood as at a point separated from the magnet support in a direction parallel to the rotational axis of the first sprocket. This allows for the rotation sensor to be made more compact in the radial direction of the rotational axle with maintained or improved spatial resolution of the detection.

The drive may further comprise: a control unit adapted for being coupled to the battery pack and the electric motor for controlling the operation of the motorised bicycle, the control unit comprises: a motor management unit adapted for being coupled to the battery pack and the electrical motor for controlling the electrical power supply from the battery pack to the electrical motor and a control-unit housing accommodating the motor management unit and for being positioned juxtaposed to and/or at the first sprocket, and on the opposite side of the sprocket from the crank arm. This has the effect that the control unit is positioned at a low point and close to the vertical centre line of the upright motorised bicycle, and will therefore only have a small influence on the balance of the vehicle. Further, it allows for a control unit that is positioned where it is not in the way of the driver. Thus, this specific positioning of the control unit has the advantage that the motorised bicycle is easier to handle. The control unit may further comprise: the battery management unit, the battery management unit being accommodated in the control-unit housing, or preferably the battery management unit being accommodated in the battery pack. The control unit may further comprise: the rotation sensor, and the magnet detector may be accommodated in the control-unit housing and/or attached to the control-unit housing. These feature further improves the advantage of specific position of the control unit.

The control unit may comprise: a connection between the magnet detector and the motor management unit for transferring a signal from the rotation sensor to the motor management unit, and the rotation sensor may generate a control signal representing the rotation or non-rotation of the first sprocket and the motor management unit may be adapted for controlling the electrical power supply from the battery pack to the electrical motor on the basis of the control signal.

The battery pack support may be adapted for releasably supporting the battery pack. The wording *releasably supporting* is understood to mean that the battery pack can be mounted and removed without using any tools. This has the advantage that it allows for a quick replacement of a discharged battery pack with a fully charged one and that the discharged battery pack can be recharged at a different location from that of the motorised bicycle. It also has the advantage that the battery pack can be stored at a different place than the motorised bicycle, thereby preventing theft of the battery pack or the motorised bicycle. Alternatively, the battery pack support may be adapted for supporting the battery pack as an integrated part of the motorised bicycle.

The control unit may comprise: a first electrical terminal for establishing a releasable electrical connection with the battery pack. The battery pack may comprise: a second electrical terminal for cooperating with the first electrical terminal and in electrical communication with the one or more battery cells for conveying electrical energy from the one or more battery cells to the control unit. The control unit may comprise one or more auxiliary terminals for establishing contact with a battery management unit accommodated in the battery pack, or with any other circuitry in the battery pack.

The motorised bicycle may comprise: a rotational axle fixed to the first sprocket, a bearing interconnecting the rotational axle and the frame for rotationally connecting the first sprocket to the frame, and a bearing house accommodating the bearing, and the control-unit housing may define a second aperture for receiving a portion of the bearing house. This allows the control unit to be closely mounted to the frame of the motorised bicycle. The control-unit housing may have a maximum extension in the direction parallel to the rotational axis of the first sprocket that is in one or more of the ranges 5 mm to 50 mm, 10 mm to 45 mm, 15 mm to 40 mm, 20 mm to 35 mm, and 25 mm to 30 mm, and/or in one or more of the ranges 5 mm to 10 mm, 10 mm to 15 mm, 15 mm to 20 mm, 20 mm to 25 mm, 25 mm to 30 mm, 30 mm to 35 mm, 35 mm to 40 mm, 40 mm to 45 mm, and 45 mm to 50 mm.

The drive unit of the present invention may further comprise: a guard adapted for enclosing at least a segment of the endless chain or belt. This has the advantage that it reduces the risk of coming into contact with the endless chain or belt when changing the battery pack, in particular since one of its battery cells is positioned directly between the first and second sprockets. The guard may be adapted for completely enclosing the endless chain or belt. This has the advantage that it eliminates the risk of coming into contact with the endless chain or belt when changing the battery pack.

The frame of the motorised bicycle according to the first aspect of the present invention may have no chain stay on the same side of the frame as the first sprocket, and the drive unit may connect to the frame at the first sprocket and at the second sprocket and may be adapted to provide a support in the frame corresponding to the support of a chain stay on the same side of the frame as the first sprocket. This has the advantage that more space is freed in which battery cells may be placed. the drive unit may comprise a bar or the like connecting to the frame at the first sprocket and at the second sprocket for increasing the structural strength of the drive unit and for providing at least some of the support in the frame corresponding to the support of a chain stay on the same side of the frame as the first sprocket.

According to a further aspect motorised bicycle comprises a guard enclosing at least a segment of the endless chain or belt.

Additionally, the guard system may completely enclose the endless chain or belt According to a further aspect the motorised bicycle comprises a rotation sensor for determining a rotation or non-rotation of the first sprocket and for being positioned juxtaposed to and/or at the first sprocket, and on the opposite side of the sprocket from the crank arm.

According to a further aspect a control unit may be provided for controlling the operation of the motorised bicycle adapted to be at least partly powered by an electrical motor, the motorised bicycle, the control unit being coupled to the battery pack and the electric motor and comprising: a motor management unit coupled to the battery pack and the electrical motor for controlling the electrical power supply from the battery pack to the electrical motor and a control-unit housing for accommodating the motor management unit and being positioned juxtaposed to and/or at the first sprocket, and on the opposite side of the sprocket from the crank arm. The aspects of the invention have been specified to involve the rear wheel as a driving wheel for the sake of clarity. However, it is understood that for motorised bicycles having the front wheel as the driving wheel, the specified aspects can be adapted, provided the second sprocket is connected to the front wheel.

### Short description of the drawings

A multitude of embodiments of the different aspects of the present invention are depicted below, where:
Figure 1 illustrates a motorised bicycle according to a preferred embodiment of the present invention,
Figure 2A illustrates the motorised bicycle shown in Figure 1, but with the drive unit shown in an exploded view,
Figure 2B illustrates an alternative embodiment of the motorised bicycle in Figure 2A,
Figure 3A illustrates a schematic circuit diagram of a battery management system,
Figure 3B illustrates a schematic circuit diagram of an auxiliary charging protection of the battery management system or unit,
Figure 4A illustrates schematic circuit diagrams of a motor management unit discharging controller, and
Figure 4B illustrates further schematic circuit diagrams of the motor management unit.
Figure 5A illustrates the motorised bicycle shown in Figure 2A, but fitted with a control unit and a different battery management unit,
Figure 5B illustrates the motorised bicycle shown in Figure 2B, but fitted with a control unit and a different battery management unit,
Figure 6A is a side view of the control unit shown in Figures 5A and 5B.
Figure 6B is a perspective view of the control unit shown in Figures 5A and 5B.

### Detailed description

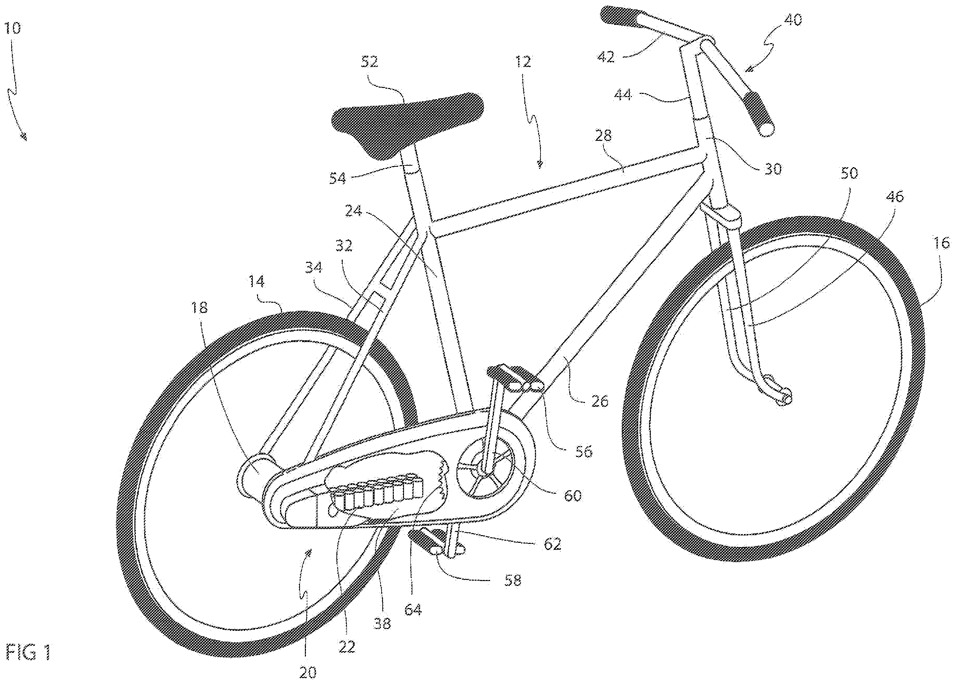

Figure 1 illustrates a motorised bicycle 10 according to the preferred embodiment of the present invention. The motorised bicycle 10 has a frame 12 rotationally connected to a rear wheel 14 and a front wheel 16. The rear wheel functions as the drive wheel when pedalling the bicycle. A brushless direct current electrical hub motor 18 is positioned at and centred on the hub of the rear wheel 14. The driving of the electrical hub motor 18 is powered and controlled by a drive unit 20. The drive unit 20 is shown with some of its parts made transparent to reveal a plurality of battery cells 22 that are rechargeable lithium-ion cells. The plurality of battery cells 22 power the electrical hub motor 18.

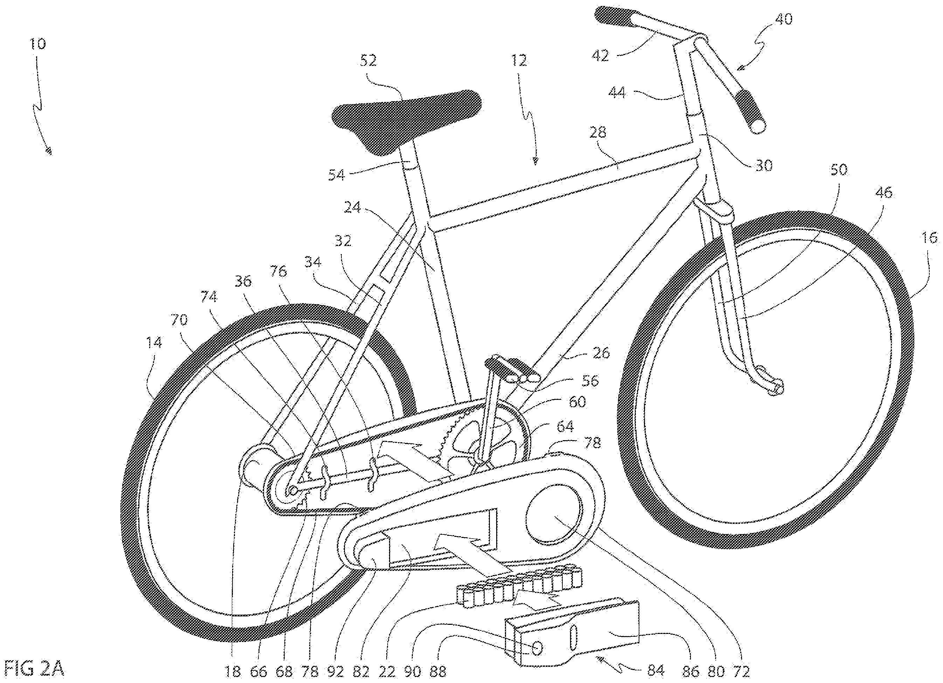

The frame 12 has a seat tube 24, a down tube 26, a head tube 30, and a top tube 28, connected in a closed loop in the presented order. The seat tube 24, a right seat stay 32, and a right chain stay 36 are connected in a closed loop in the presented order. Similarly, the seat tube 24, a left seat stay 34, and a left chain stay are connected in a closed loop in the presented order. The axle of the rear wheel 14 connects the right seat stay 32 and chain stay with the left seat stay 34 and chain stay at the points where the seat and chain stays meet. The right chain stay 36 is shown in the subsequent Figure 2A. The left chain stay is not shown, but is located directly on the opposite side of the rear wheel 14 from the right chain stay 36.

The motorised bicycle further has a front set 40 for steering the vehicle. The front set 40 has a handle bar 42 centred on a stem 44 rigidly connecting to a fork 46 inside the head tube 30. The fork 46 is rotationally connected to the head tube 30. The axle of the front wheel 16 connects the right 48 and left 50 arms of the fork 46.

The motorised bicycle 10 has a seat 52 supported on a seat post 54 telescoping from the seat tube 24.

A right pedal 56 is connected via a right crank arm 60 to a first sprocket 64 positioned on the right side of the frame 12 and rotationally connected thereto at the lower end of the seat tube 24. Similarly, a left pedal 58 is connected via a left crank arm 62 to the first sprocket 64 through a first bracket bearing axle, or rotational axle, at the lower end of the seat tube 24. The first sprocket 64 is connected to a second sprocket 66 via an endless chain 68 in the form of a roller chain, as is shown in Figure 2A. The second sprocket 66 is in turn connected to the rear wheel 14, thus allowing muscle power applied to the right 56 and left 58 pedals to be transmitted to the rear wheel 14.

Each of the battery cells of the plurality of battery cells 22 are positioned at a point on a line between the closest points of the first 64 and second 66 sprockets. This means that the plurality of battery cells 22 are positioned between the first 64 and second 66 sprockets, and within the loop of the endless chain 68. This positioning of the plurality of battery cells 22 has the effect of lower centre-of-gravity as compared to a positioning at the seat 24, down 26, and top 28 tubes. Even though the plurality of battery cells 22 are positioned on one side of the frame 12, they are positioned close to the frame 12 and the rear wheel 14, and will therefore have an insignificant negative effect on the balance of the motorised bicycle. This negative effect is greatly overcome by the lowered centre-of-gravity due to the positioning. Further, the positioning only has a small influence of the sideways profile of the motorised bicycle 10 as compared to an ordinary bicycle. The plurality of battery cells 22 are positioned such that when the right crank arm 60 points backwards, some of the battery cells of the plurality of battery cells 22 are positioned between the right crank arm 60 and the right chain stay 36, where the latter is shown in Figure 2A.

Figure 2A illustrates the same motorised bicycle 10 as in Figure 1, but with the drive unit 20 shown in exploded view revealing its different components. The drive unit has an inner part 70 rigidly mounted on the right chain stay 36 by a first 74 and a second 76 u-bolt spaced apart along the right chain stay 36. The inner part 70 is partly positioned between the right chain stay 36 and the rear wheel 14. Further, the drive unit 20 has an outer part 72 that can be rigidly attached to the inner part 70 by a plurality of holders several support. When the outer part 72 is attached to the inner part 70 they form a guard completely enclosing the endless chain 68. The outer part 72 has an aperture 80 through which the right crank arm 60 extends and a recess 82 for receiving a battery pack 84 supporting the plurality of battery cells 22 within an enclosing housing 86. The enclosing battery pack 84 is releasably supported within the recess 82. The housing can be opened to replace the plurality of battery cells 22. The dimension and shape of the recess 82 and the housing 86 are such that the battery pack 84 fits closely within the recess 82, whereby the inner 70 and outer 72 parts have the function of a battery pack support. In an alternative embodiment, the plurality of battery cells 22 is an integrated part of the motorised bicycle 10.

The battery pack 84 has a protrusion covering a battery management system 88 and fitted with an electrical connecter 90 in the form of a female terminal through which electrical energy can be received from an external source of electrical energy. In an alternative embodiment, the electrical connector 90 is a male terminal. The battery management system 88 is in electrical communication with the electrical connector 90 and the plurality of battery cells 22. The battery management system 88 controls the charging of the plurality of battery cells 22. This means that the plurality of battery cells 22 can be recharged both when the battery pack 84 is supported by the battery pack support and when it has been removed from the battery pack support. The battery pack 84 is releasably connected to the outer part 72, which means that it can be removed and replaced by another battery pack without using any tools.

The battery management system 88 further controls the discharge of electrical energy from the plurality of battery cells 22 to the electrical hub motor 18. The battery management system 88 is in electrical communication with the electrical hub motor 18 through electrical cables and controls the driving of the motorised bicycle 10 by the electrical motor 18.

The outer part 72 further has a protrusion covering a motor management unit 92 controlling the driving of the hub motor with respect to commands or feedback, such as pedalling, from the driver of the motorised bicycle 10.

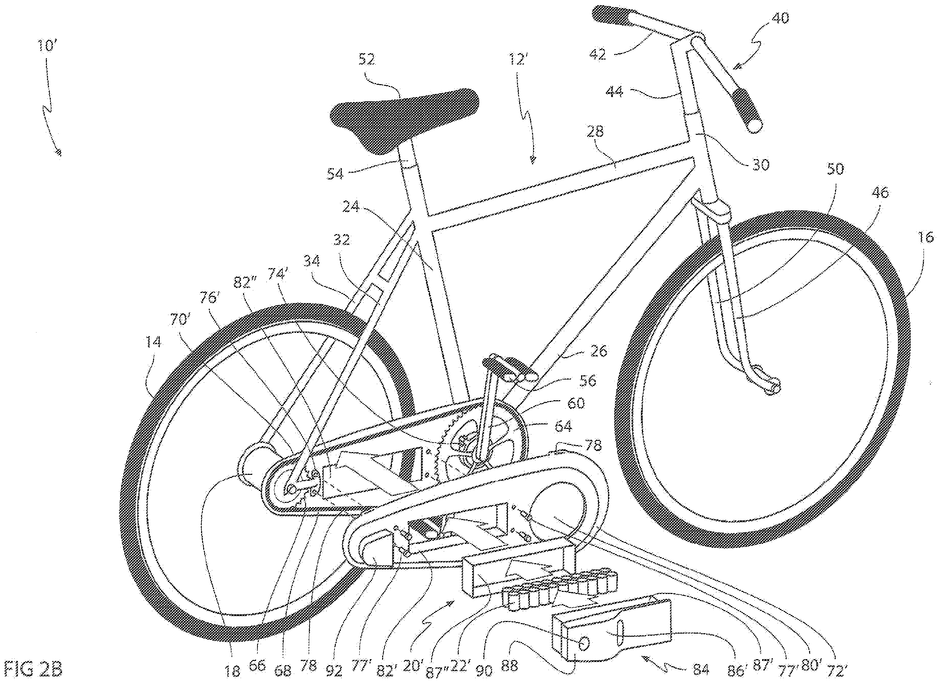

Figure 2B illustrates an alternative embodiment to the motorised bicycle 10' of Figure 2A, with the drive unit 20' shown in an exploded view revealing its different components. The drive unit has an inner part 70' rigidly mounted on the frame 12 by a first holder 74' at the first sprocket 64 and a second holder 76' at the second sprocket 66. The inner part 70' interconnects the first holder 74' and the second holder 76' and provides a support to the frame 12'corresponding to that of a right chain stay. Further, the drive unit 20' has an outer part 72' that is rigidly attached to the inner part 70' by a plurality of screws 77'. Some of the screws 77' engage the second holder 76', while the remaining screw 77' directly engages the inner part 70'. The drive unit 20' of is preferably mounted to the frame 12' before reaching the market.

When the outer part 72' is attached to the inner part 70', they form a guard completely enclosing the endless chain 68. The outer part 72' has an aperture 80' through which the right crank arm 60 extends and a recess 82' for receiving a battery pack 84' supporting the plurality of battery cells 22' within a housing 86' composed of a front section 87' and a back section 87". The battery pack 84' is releasably supported within the recess 82'. The battery pack 84' can be opened to replace the plurality of battery cells 22'. The dimension and shape of the recess 82' and the housing 86' are such that the battery pack 84' fits closely within the recess 82', whereby the inner 70' and outer 72' parts have the function of a battery pack support.

Further, in an alternative embodiment the inner part 70' comprises a bar for increasing its structural strength and to provide a significant portion of a support in the frame corresponding to that of an ordinary chain stay as in the preferred embodiment shown in Figure 2A. The bar connects to the frame 12' at the first sprocket and at the second sprocket.

The features of the alternative embodiments shown in Figure 2B that are identical to the features of the preferred embodiment shown in Figure 2A have been given the same indexing. The features of the alternative and the preferred embodiments that are different but have related functions have been given the same number, but are instead distinguished by priming in Figure 2B.

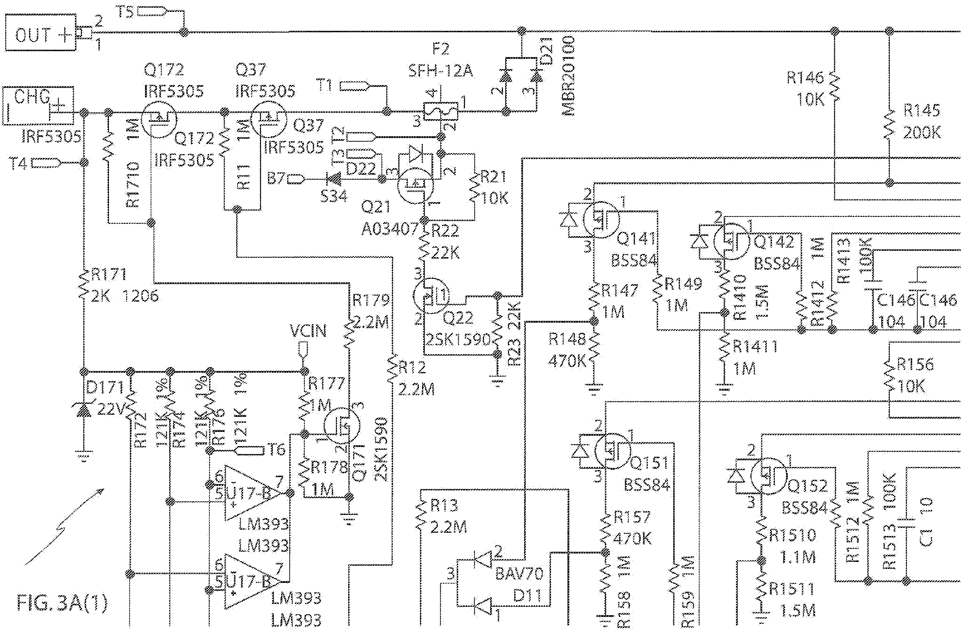

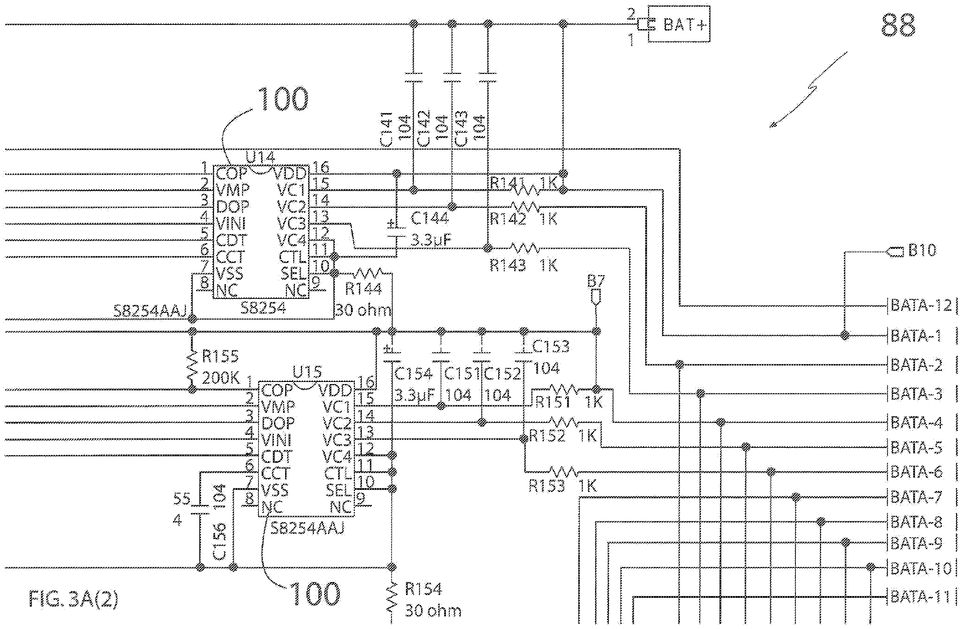

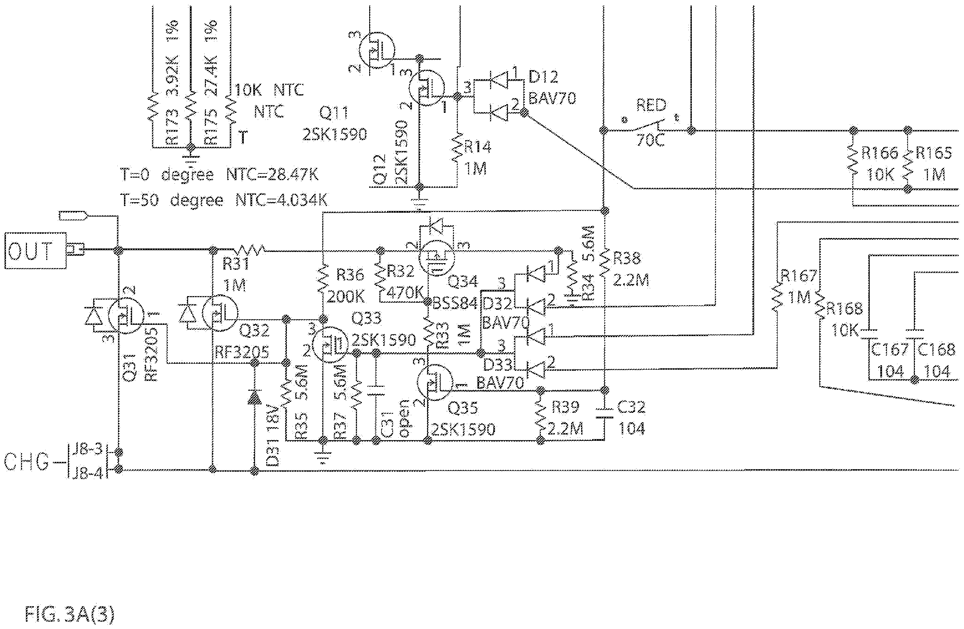

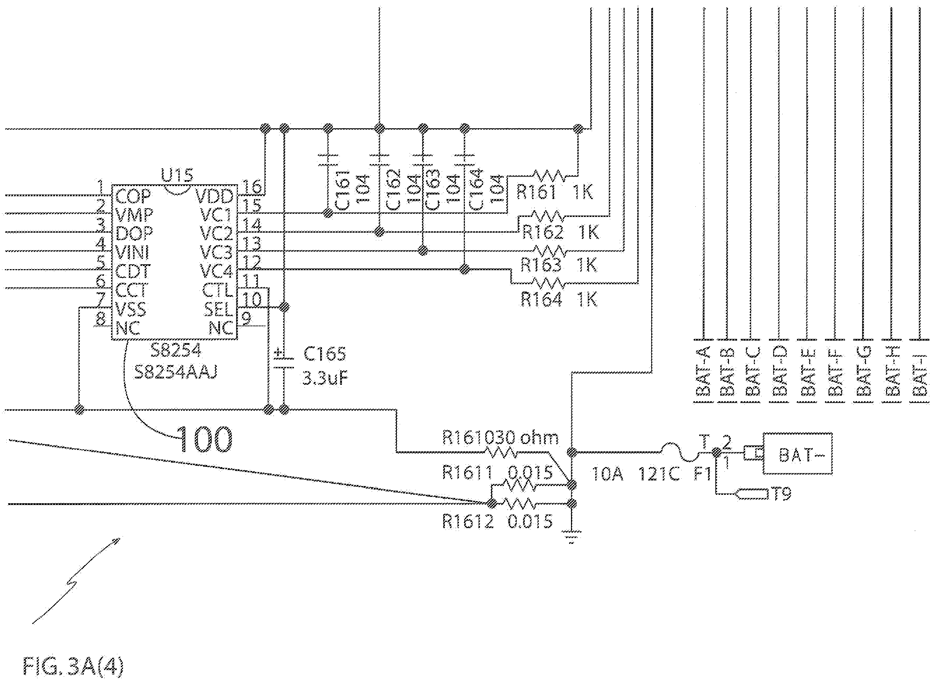

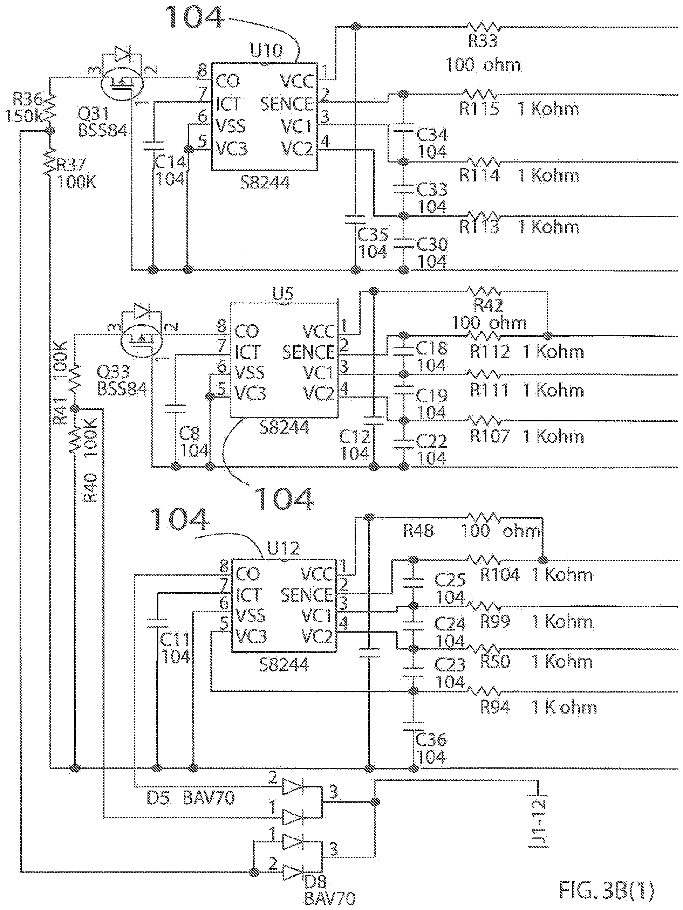

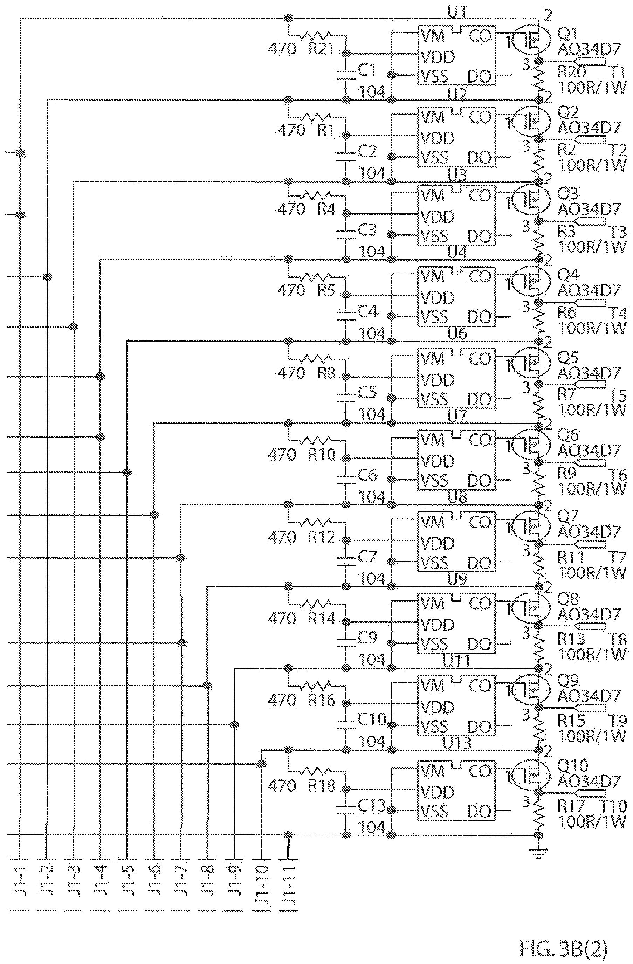

Figure 3A illustrates a schematic circuit diagram of a preferred embodiment of the battery management system 88. The battery management system includes a number of S-8254 battery protection integrated circuits 100 described in detail in "BATTERY PROTECTION IC FOR 3-SERIAL OR 4-SERIAL-CELL PACK", S-8254, Rev.2.3_00, by Seiko Instruments Inc. Figure 3B illustrates a schematic circuit diagram of an additional auxiliary charging protection 102 of the battery management system 88. The auxiliary charging protection 102 includes a number of S-8244 battery protection integrated circuits 104 described in detail in "BATTERY PROTECTION IC FOR SERIES CONNECTION OF 1 TO 4 CELLS (SECONDARY PROTECTION)", S-8244, Rev.0.8, by Seiko Instruments Inc.

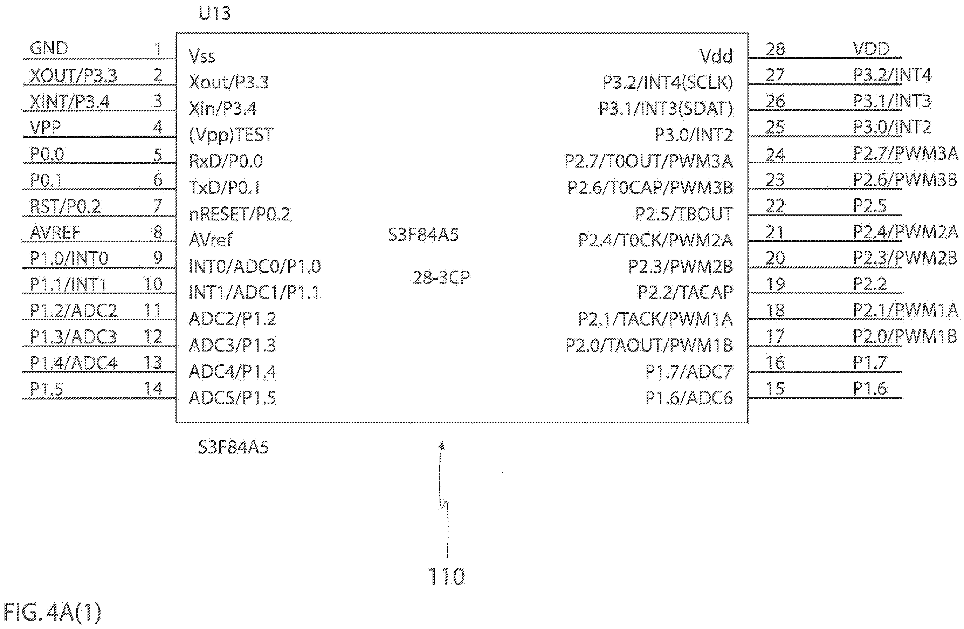

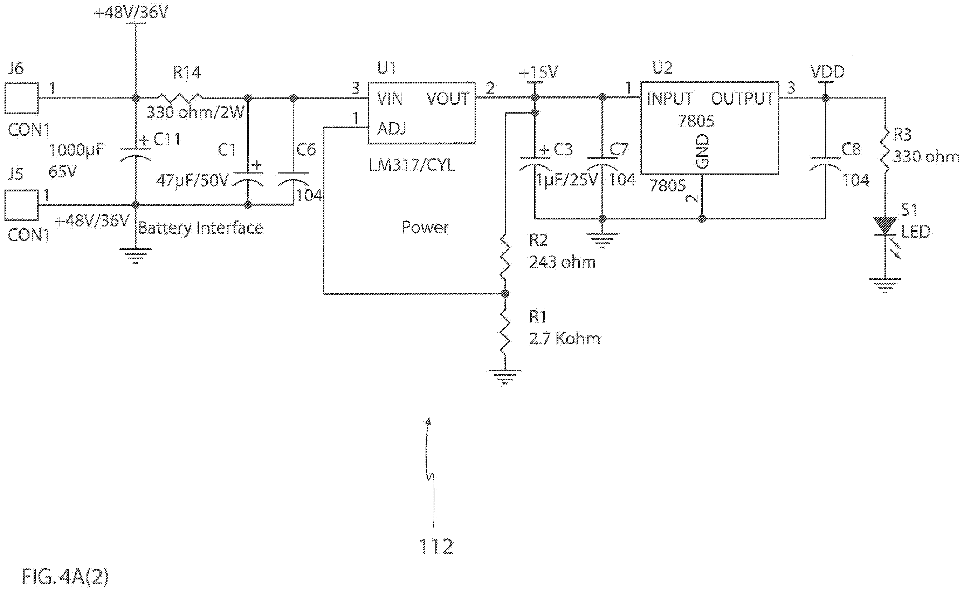

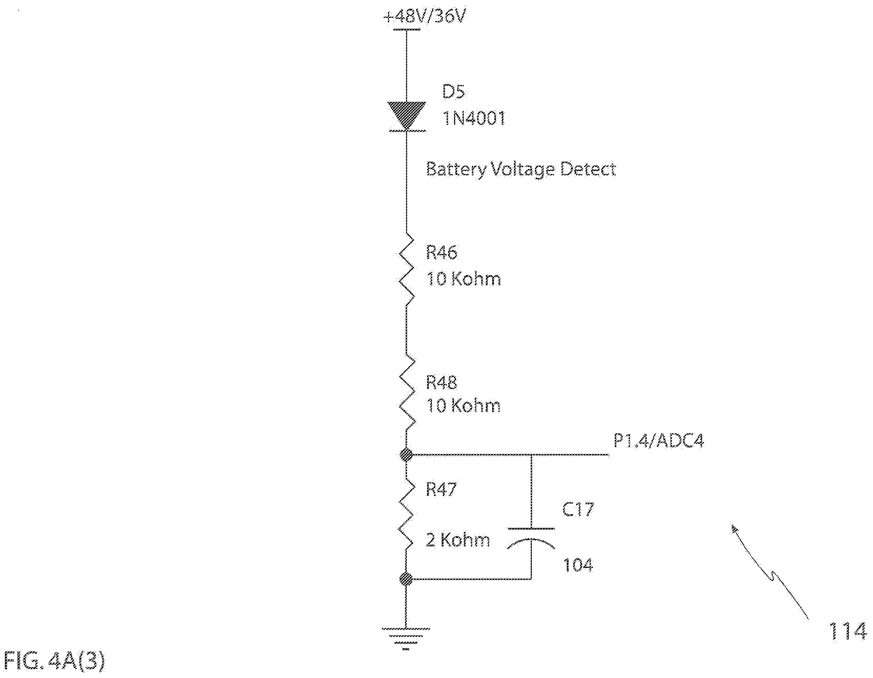

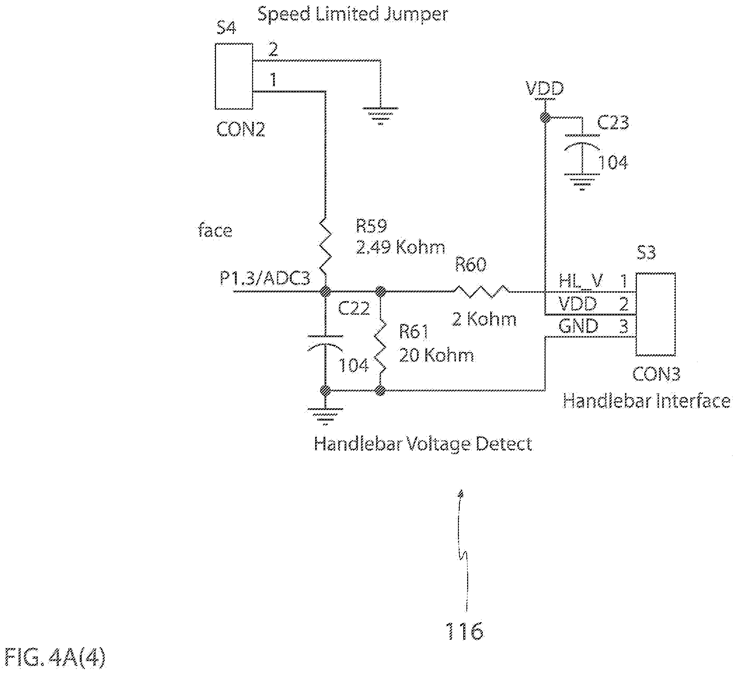

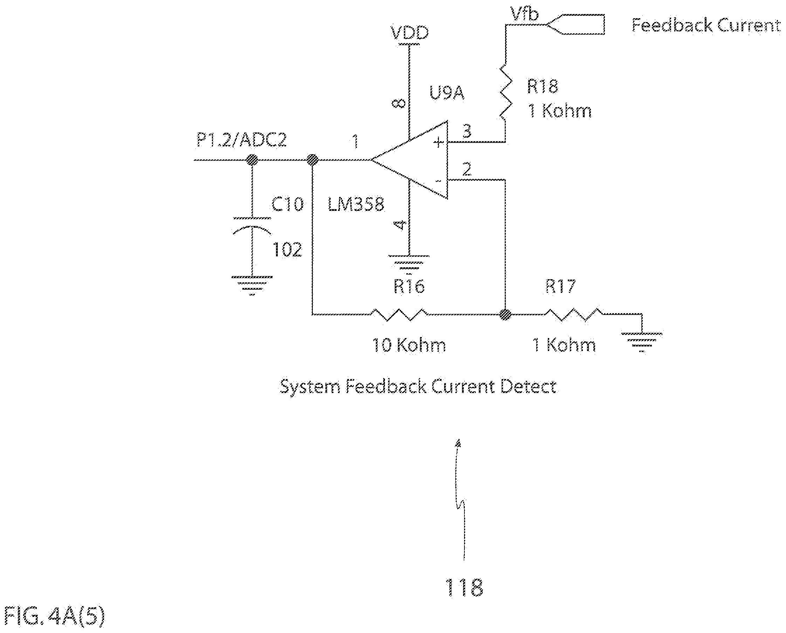

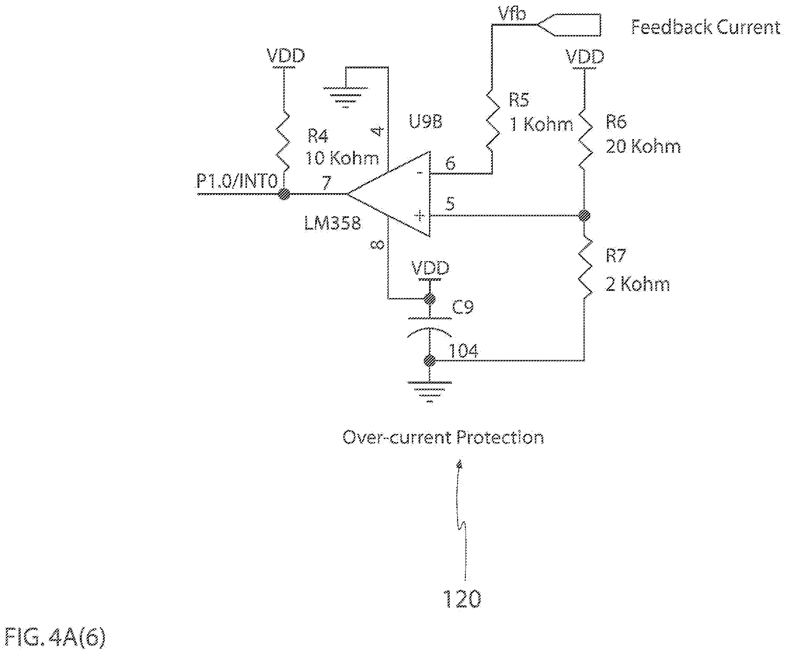

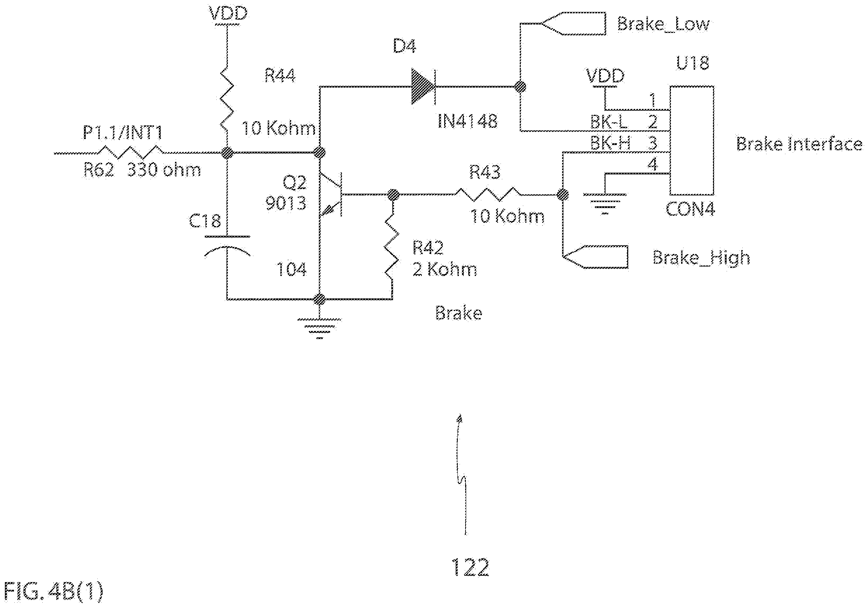

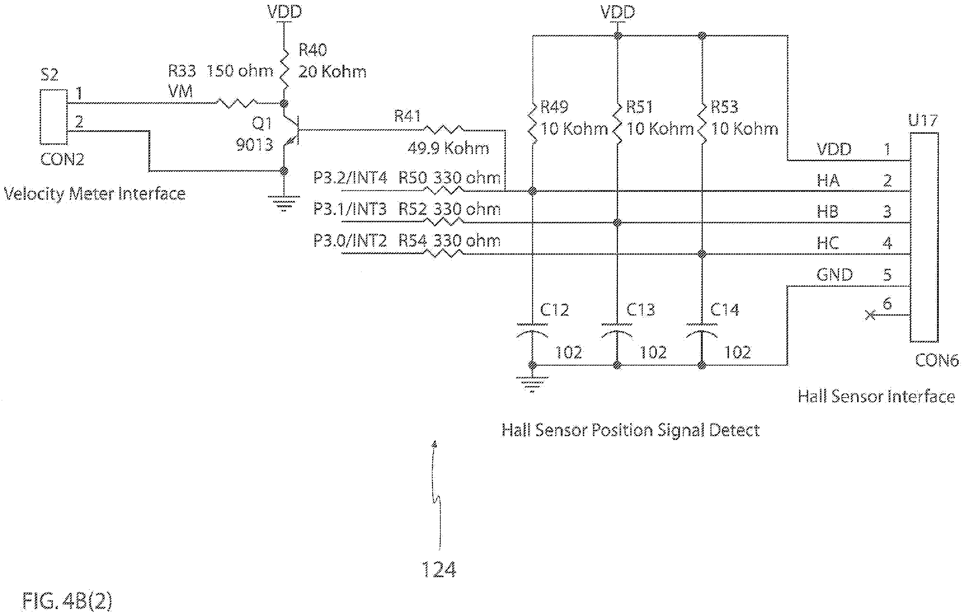

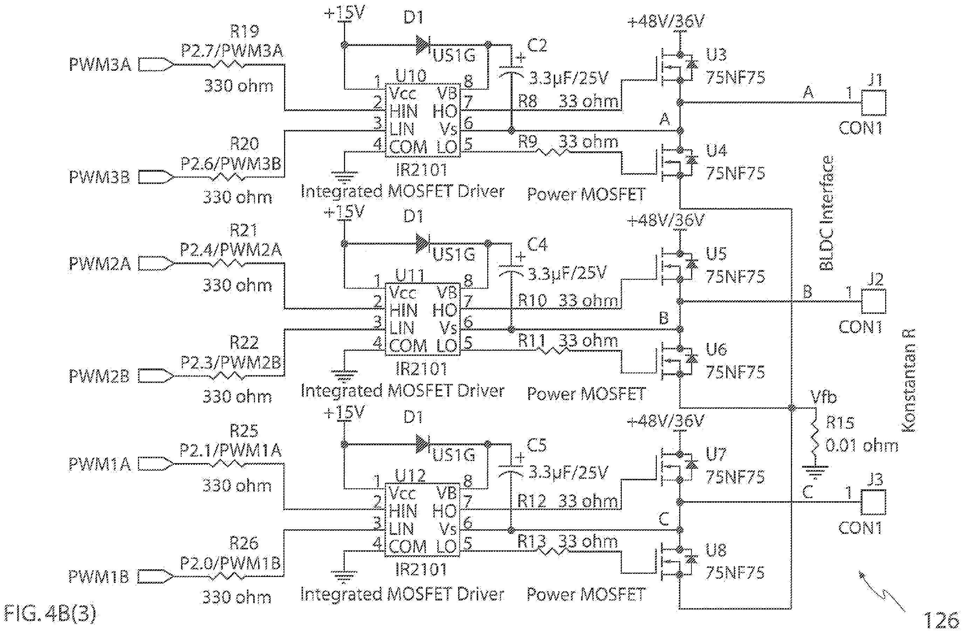

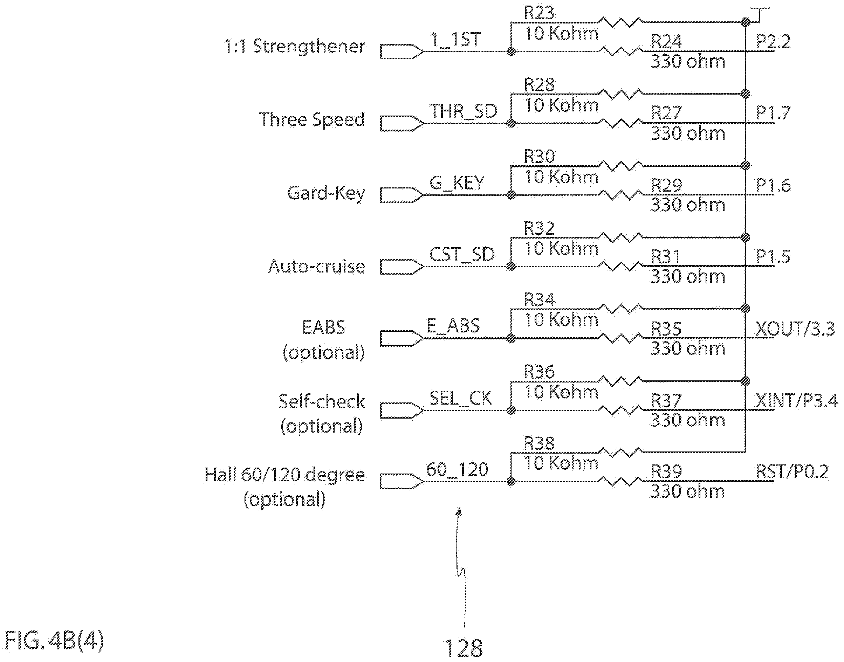

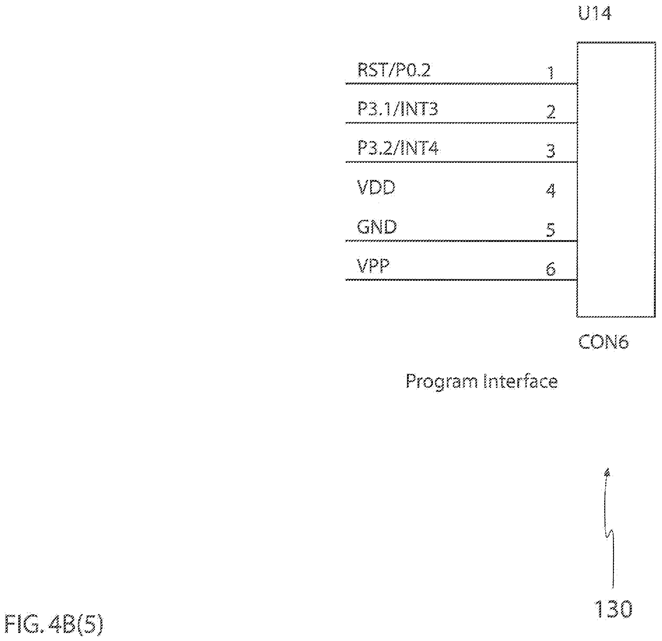

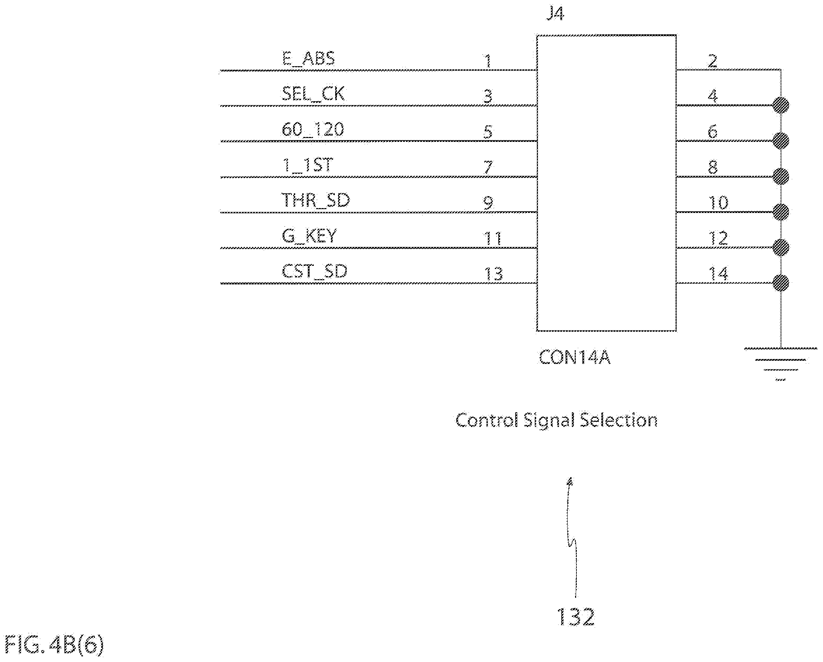

Figure 4a and 4b illustrates schematic circuit diagrams of a motor management unit based on a S3F84A5 8-bit CMOS Microcontroller 110, which is described in detail in "USER'S MANUAL, S3F84A5, 8-Bit CMOS Microcontrollers", May 2009, REV 1.00, by Samsung Electronics Co., Ltd. The motor management unit further has a power supply interface 112, a battery voltage detect circuit 114, a handlebar voltage detect and speed limit circuit 116, a system feedback current detect circuit 118, a system over-current protection circuit 120, a break mechanism circuit 122, a Hall sensor position detect and velocity meter circuit 124, a power MOSFET and integrated driver circuit 126, an other function input selection circuit 128, a program interface 130, and a control signal selector 132. The S3F84A5 8-bit CMOS Microcontroller 110 and the circuit diagrams 112-132 are further described in "S3F84A5 APPLICATION NOTE REV1.0, E-BIKE CONTROLLER", by Samsung Electronics Co., Ltd.

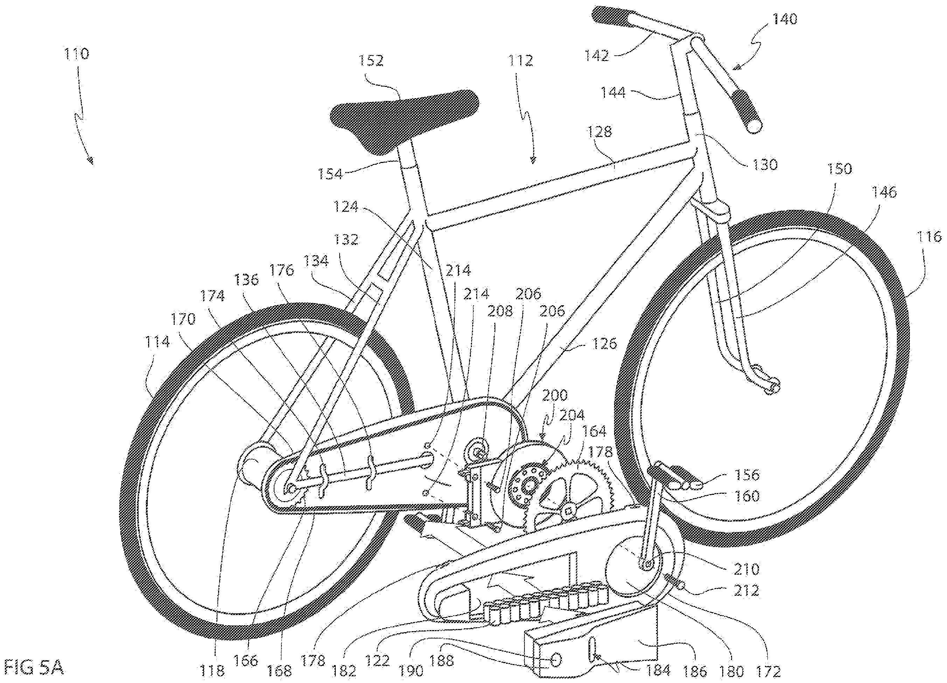

Figure 5A illustrates the motorised bicycle shown in Figure 2A, but fitted with a control unit 200. The features which Figure 5A has in common with Figure 2A or that are related to features in Figure 2A have been given an indexing with a number that is greater by one hundred as compared to Figure 2A, e.g. the outer part having index 72 in Figure 2A have been given the index 172 in Figure 5A. The motor management unit 203 is housed inside the control unit 200. The control unit 200 is positioned on the inside of the first sprocket 164, i.e. on the opposite side of the first sprocket 164 from the right crank arm 160. The control unit is juxtaposed to the first sprocket 164, i.e. it is located on the same side of the seat tube 124 and the down tube 126 as the first sprocket 164. The control unit also has a rotation sensor 204 that determines the rotation velocity the first sprocket 164. A pair of screws 206 secures the control unit 200 to the inner part 170 via a pair of cooperating screw holes 214 in the inner part 170. The right crank arm 160 has a bolt hole 210 through which a threaded bolt 212 engages the rotational axle 208, or bracket bearing axle, which has a threaded hole that cooperates with the threaded bolt 212.

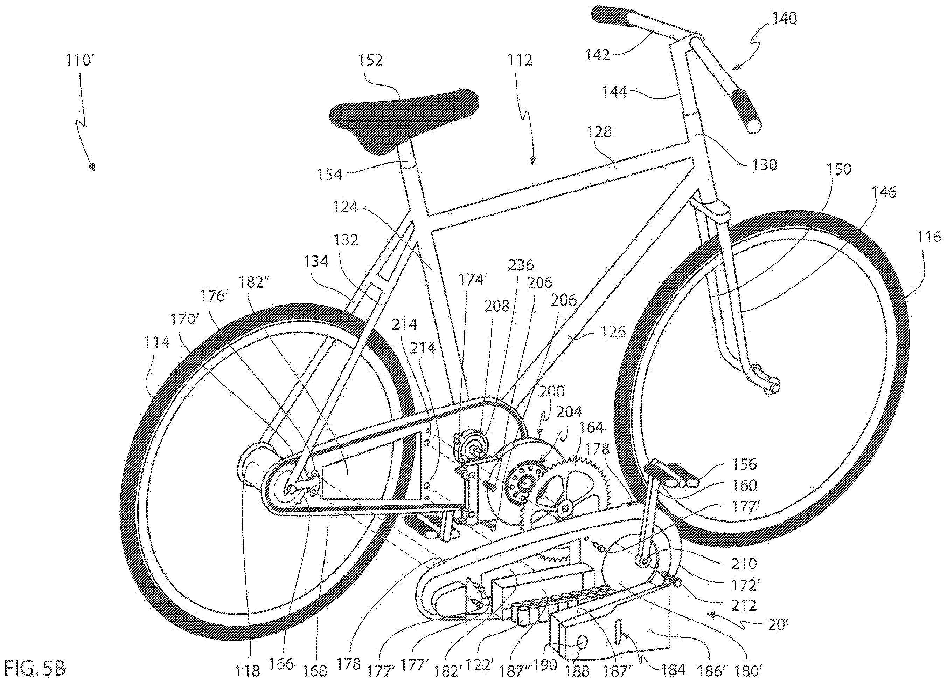

Figure 5B illustrates the motorised bicycle shown in Figure 2B, but fitted with a control unit 200. The features which Figure 5B has in common with Figure 2B or that are related to features in Figure 2B have been given an indexing with a number that is greater by one hundred as compared to Figure 2B, e.g. the. outer part having index 72' in Figure 2B have been given the index 172' in Figure 5B. The motor management unit 203 is housed inside the control unit 200. The control unit 200 is positioned on the inside of the first sprocket 164, i.e. on the opposite side of the first sprocket 164 from the right crank arm 160. The control unit is juxtaposed to the first sprocket 164, i.e. it is located on the same side of the seat tube 124 and the down tube 126 as the first sprocket 164. The control unit also has a rotation sensor 204 that determines the rotation velocity the first sprocket 164. A pair of screws 206 secures the control unit 200 to the inner part 170' via a pair of cooperating screw holes 214 in the inner part 170'. The right crank arm 160 has a bolt hole 210 through which a threaded bolt 212 engages the rotational axle 208, or bracket bearing axle, which has a threaded hole that cooperates with the threaded bolt 212.

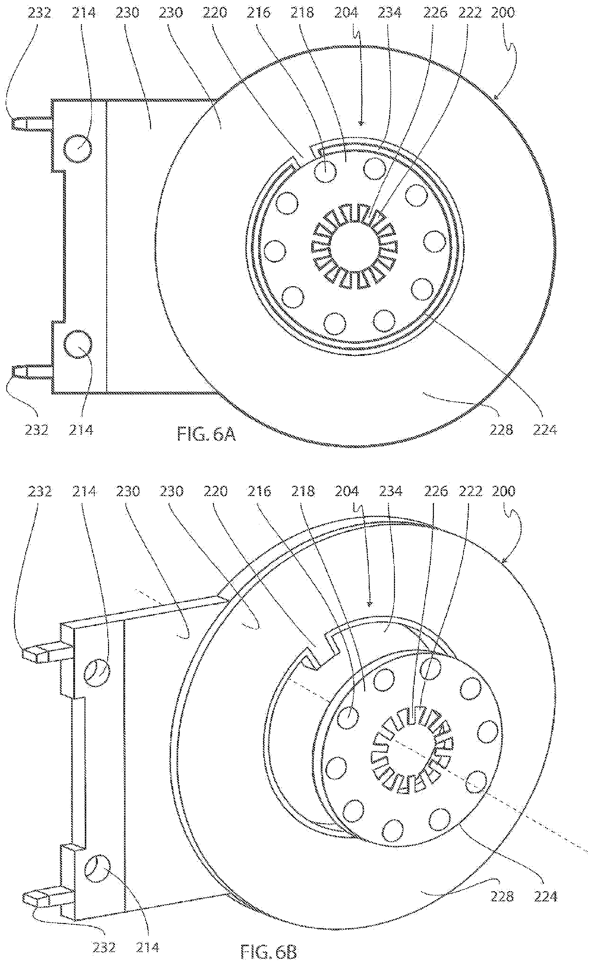

Figures 6A and 6B are side and perspective views, respectively, of the control unit 200 shown in Figures 5A and 5B. The control unit 200 has a control-unit housing 230 accommodating the motor management unit 228. The motor management unit 228 is coupled to the electrical motor and controls the electrical power supply from said battery pack 184 to the electrical motor 118 depending on control signals from the rotation sensor 204. The control signal represents a rotation of the first sprocket 164. The control unit 200 has two electrical terminals 232 protruding from the housing 230 to which cooperating female terminals on the battery pack 184 can connect. The electrical terminals 232 are connected to the motor management unit 228 and the female terminals of the battery pack are connected to the battery cells 22. This way the electrical motor 118 can be driven by the battery cells 22. The control-unit housing 230 has a pair of screw apertures 215 through which the screws 206 can engage the inner part 170 and support the control unit relative to the inner part 170.

The rotation sensor 204 has a disc shaped magnet support 218 supporting ten permanent magnets 216 along its circumference 224 and a magnet detector 220 that detects changes in position of the permanent magnets 216. The disc shaped magnet support has a first aperture 222 at its centre through which the rotational axle 208 passes. The rotational axle 208 is interconnected to the frame 12 of the motorised bicycle 10 by a bearing. The magnet support 218 has fourteen teeth 226 directed towards the geometric centre of the aperture 222. The teeth 226 are flexible and the tips of the teeth define a minimum area between them that is smaller than the area of the cross section of the rotational axle 208 at the point where the magnet support 218 is to be mounted. This way the teeth 226 will flex when the magnet support 218 is pushed onto the rotational axle 208 and secure the magnet support rigidly to the rotational axle 208.

The magnet detector 220 is attached to the control-unit housing 230 and positioned at a point normal to the disc shaped magnet support 218, i.e. when viewed from the right along the rotational axle 208, the magnet detector 220 is partly behind the magnet support 218. The magnet detector has a magnetic field sensor that detects changes in the magnetic field generated by the permanent magnets 216 when the rotational axle 208 and the first sprocket 64 attached to the rotational 208 rotate.

The control unit 230 housing defines a second aperture 234 that receives a portion of the bearing house 236 accommodating the bearing interconnecting the rotational axle 208 and said frame 12. The control-unit housing has a maximum width, or maximum extension in a direction parallel to the rotational axis of the first sprocket, that is 25 mm.

## Claims

1. A motorised bicycle (10) comprising an electric motor (18) for at least partly powering the motorised bicycle, comprising:
a frame (12),
a rear wheel (14) rotationally connected to said frame (12),
a first sprocket (64) rotationally connected to said frame (12), said first sprocket (64) further being connected to a crank arm (60) located on the same side of the frame (12) as said first sprocket (64),
a second sprocket (66) spaced apart from said first sprocket (64) and rotationally connected to said frame (12), said second sprocket (66) further being connected to said rear wheel (14),
an endless chain (68) or belt interconnecting said first and second sprockets (66) in a loop for transferring power from said crank arm (60) to said rear wheel (14), and
a drive unit (20) comprising:
a battery pack (84, 84') including one or more battery cells (22, 22') for providing said electrical motor (18) with electrical energy,
and
a battery pack support connecting said battery pack (84, 84') to said frame (12), **characterised in that**
said battery pack support and said battery pack (84, 84') positioning a battery cell of said one or more battery cells (22, 22') directly between said first (64) and second sprockets (66) and within said loop of said endless chain (68) or belt, such that said battery cell is positioned on a point in space on a line segment going from a point on the first sprocket (64) to a point on the second sprocket (66).

2. The motorised bicycle (10) according to claim 1, **characterised by** said battery pack support and said battery pack (84, 84') positioning said battery cell (22, 22') of said one or more battery cells (22, 22') proximal to said first sprocket (64) and simultaneously allowing said crank arm (60) to complete a full revolution.

3. The motorised bicycle (10) according to any of the claims 1 to 2, **characterised by** further comprising:
a first electrical connector (90) in electrical communication with said one or more battery cells (22, 22') for receiving electrical energy from an external source of electrical energy, and
a battery management unit (88) for controlling a charging of said one or more battery cells (22, 22') by electrical energy from said electrical connector (90).

4. The motorised bicycle (10) according to claim 3, **characterised by** further comprising:
a rotation sensor (204) for determining a rotation or non-rotation of said first sprocket (64) and positioned at said first sprocket (64), and on the opposite side of said sprocket (64) from said crank arm (60).

5. The motorised bicycle (10) according to claim 4, **characterised by** said rotation sensor comprising (204):
a permanent magnet (216),
a magnet support (218) mounting said magnet (216) in a fixed position relative to said first sprocket (64), and
a magnet detector (220) mounted in a fixed position relative to said frame (12) for detecting a change in position of said one or more magnets (216) relative to said frame (12).

6. The motorised bicycle (10) according to claim 5, **characterised by** said motorised bicycle comprising:
a rotational axle fixed to said first sprocket (64), and a bearing interconnecting said rotational axle and said frame (12) rotationally connecting said first sprocket (64) to said frame (12), and said magnet support (218) being rigidly mounted directly onto said rotational axle, and said magnet support (218) being flat and defining a first aperture (222) for allowing said rotational axle (208) to pass through said magnet support (218).

7. The motorised bicycle (10) according to claim 6, **characterised by** said magnet support (218) comprising a number of teeth (226) directed towards the geometric centre of said first aperture (222) for engaging and locking onto said rotational axle (208).

8. The motorised bicycle (10) according to any of the claims 1 to 7, **characterised by** further comprising:
a control unit (230) coupled to said battery pack (84, 84') and said electric motor (18) for controlling the operation of said motorised bicycle (10), said control unit (230) comprising:
a motor management unit (228) coupled to said battery pack (84, 84') and said electrical motor (18) for controlling the electrical power supply from said battery pack (84, 84') to said electrical motor (18) as a function of a control signal, and
a control-unit housing accommodating said motor management unit (228) and being positioned juxtaposed to and/or at said first sprocket (64), and on the opposite side of said sprocket from said crank arm (60).

9. The motorised bicycle (10) according to claim 8, **characterised by** said control unit (230) further comprising:
a battery management unit (88), said battery management unit (88) being accommodated in said control-unit housing, or preferably said battery management unit (88) being accommodated in said battery pack (84, 84').

10. The motorised bicycle (10) according to any of the claims 5 to 7 in combination with claims 8 to 9, **characterised by** said control unit (230) further comprising
said rotation sensor (204), and said a magnet detector (220) being accommodated in said control-unit housing and/or attached to said control-unit housing.

11. The motorised bicycle (10) according to any of the claims 1 to 10, **characterised by** further comprising:
a guard enclosing at least a segment of said endless chain (68) or belt.

## Patentansprüche

1. Motorisiertes Fahrrad (10), umfassend einen Elektromotor (18) zum mindestens teilweisen Versorgen des motorisierten Fahrrads mit Energie, umfassend:
einen Rahmen (12),
ein Hinterrad (14), das drehbar mit dem Rahmen (12) verbunden ist,
ein erstes Kettenblatt (64), das drehbar mit dem Rahmen (12) verbunden ist, wobei das erste Kettenblatt (64) ferner mit einem Kurbelarm (60) verbunden ist, der sich auf derselben Seite des Rahmens (12) befindet wie das erste Kettenblatt (64),
ein zweites Kettenblatt (66), das von dem ersten Kettenblatt (64) beabstandet und drehbar mit dem Rahmen (12) verbunden ist, wobei das zweite Kettenblatt (66) ferner mit dem Hinterrad (14) verbunden ist,
eine Endloskette (68) oder ein Endlosband, die/das das erste und das zweite Kettenrad (66) in einer Schleife miteinander verbindet, um Energie von dem Kurbelarm (60) auf das Hinterrad (14) zu übertragen, und
eine Antriebseinheit (20), umfassend:
einen Batteriepack (84, 84') einschließlich einer oder mehrerer Batteriezellen (22, 22') zum Bereitstellen von elektrischer Energie an den Elektromotor (18),
und
eine Batteriepackstütze, die den Batteriepack (84, 84') mit dem Rahmen (12) verbindet, **dadurch gekennzeichnet, dass** die Batteriepackstütze und der Batteriepack (84, 84') eine Batteriezelle der einen oder der mehreren Batteriezellen (22, 22') direkt zwischen das erste (64) und das zweite Kettenblatt (66) und innerhalb der Schleife der Endloskette (68) oder des Endlosbandes positionieren, sodass die Batteriezelle an einem Punkt im Raum auf einem Liniensegment positioniert ist, das von einem Punkt an dem ersten Kettenblatt (64) zu einem Punkt an dem zweiten Kettenblatt (66) verläuft.

2. Motorisiertes Fahrrad (10) nach Anspruch 1, **dadurch gekennzeichnet, dass** die Batteriepackstütze und der Batteriepack (84, 84') die Batteriezelle (22, 22') der einen oder der mehreren Batteriezellen (22, 22') proximal zu dem ersten Kettenblatt (64) positionieren und gleichzeitig dem Kurbelarm (60) die Vollendung einer ganzen Umdrehung ermöglichen.

3. Motorisiertes Fahrrad (10) nach einem der Ansprüche 1 bis 2, **dadurch gekennzeichnet, dass** es ferner Folgendes umfasst:
einen ersten elektrischen Verbinder (90) in elektrischer Verbindung mit der einen oder den mehreren Batteriezellen (22, 22') zum Empfangen von elektrischer Energie aus einer externen Quelle für elektrische Energie, und
eine Batterieverwaltungseinheit (88) zum Steuern eines Ladevorgangs der einen oder der mehreren Batteriezellen (22, 22') mittels elektrischer Energie von dem elektrischen Verbinder (90).

4. Motorisiertes Fahrrad (10) nach Anspruch 3, **dadurch gekennzeichnet, dass** es ferner Folgendes umfasst:
einen Drehsensor (204) zum Bestimmen einer Drehung oder Nicht-Drehung des ersten Kettenblattes (64), und der an dem ersten Kettenrad (64) und auf der zu dem Kurbelarm (60) gegenüberliegenden Seite des Kettenblattes (64) positioniert ist.

5. Motorisiertes Fahrrad (10) nach Anspruch 4, **dadurch gekennzeichnet, dass** der Drehsensor (204) Folgendes umfasst:
einen Dauermagneten (216),
eine Magnetstütze (218), die den Magneten (216) in einer festen Position relativ zu dem ersten Kettenblatt (64) montiert, und
einen Magnetdetektor (220), der in einer festen Position relativ zu dem Rahmen (12) montiert ist, um eine Änderung der Position des einen oder der mehreren Magnete (216) relativ zu dem Rahmen (12) zu detektieren.

6. Motorisiertes Fahrrad (10) nach Anspruch 5, **dadurch gekennzeichnet, dass** das motorisierte Fahrrad Folgendes umfasst:
eine Drehachse, die an dem ersten Kettenblatt (64) befestigt ist, und ein Lager, das die Drehachse und den Rahmen (12) miteinander verbindet und das erste Kettenblatt (64) drehbar mit dem Rahmen (12) verbindet, und wobei die Magnetstütze (218) starr direkt auf der Drehachse montiert ist, und wobei die Magnetstütze (218) flach ist und eine erste Öffnung (222) definiert, um zu ermöglichen, dass die Drehachse (208) durch die Magnetstütze (218) verläuft.

7. Motorisiertes Fahrrad (10) nach Anspruch 6, **dadurch gekennzeichnet, dass** die Magnetstütze (218) eine Anzahl von Zähnen (226) umfasst, die in Richtung des geometrischen Mittelpunktes der ersten Öffnung (222) gerichtet sind, um in die Drehachse (208) einzugreifen und diese zu arretieren.

8. Motorisiertes Fahrrad (10) nach einem der Ansprüche 1 bis 7, **dadurch gekennzeichnet, dass** es ferner Folgendes umfasst:
eine Steuereinheit (230), die an den Batteriepack (84, 84') und den Elektromotor (18) gekoppelt ist, um den Betrieb des motorisierten Fahrrads (10) zu steuern, wobei die Steuereinheit (230) Folgendes umfasst:
eine Motorverwaltungseinheit (228), die an den Batteriepack (84, 84') und den Elektromotor (18) gekoppelt ist, um die Versorgung des Elektromotors (18) mit elektrischer Energie aus dem Batteriepack (84, 84') in Abhängigkeit eines Steuersignals zu steuern, und
ein Steuereinheitsgehäuse, in dem die Motorverwaltungseinheit (228) untergebracht ist und das neben und/oder an dem ersten Kettenblatt (64) und auf der zu dem Kurbelarm (60) gegenüberliegenden Seite des Kettenblattes positioniert ist.

9. Motorisiertes Fahrrad (10) nach Anspruch 8, **dadurch gekennzeichnet, dass** die Steuereinheit (230) ferner Folgendes umfasst:
eine Batterieverwaltungseinheit (88), wobei die Batterieverwaltungseinheit (88) in dem Steuereinheitsgehäuse untergebracht ist, oder wobei vorzugsweise die Batterieverwaltungseinheit (88) in dem Batteriepack (84, 84') untergebracht ist.

10. Motorisiertes Fahrrad (10) nach einem der Ansprüche 5 bis 7 in Kombination mit den Ansprüchen 8 bis 9, **dadurch gekennzeichnet, dass** die Steuereinheit (230) ferner Folgendes umfasst:
den Drehsensor (204), und wobei ein Magnetdetektor (220) in dem Steuereinheitsgehäuse untergebracht und/oder an dem Steuereinheitsgehäuse angebracht ist.

11. Motorisiertes Fahrrad (10) nach einem der Ansprüche 1 bis 10, **dadurch gekennzeichnet, dass** es ferner Folgendes umfasst:
eine Schutzvorrichtung, die mindestens ein Segment der Endloskette (68) oder des Endlosbandes umschließt.

## Revendications

1. Bicyclette à moteur électrique (10) comprenant un moteur électrique (18) pour alimenter au moins partiellement la bicyclette motorisée, comprenant:
un châssis (12),
une roue arrière (14) liée en rotation avec ledit châssis (12),
un premier pignon (64) lié en rotation avec ledit châssis (12), ledit premier pignon (64) étant en outre relié à un bras de manivelle (60) placé sur le même côté du châssis (12) que ledit premier pignon (64),
un deuxième pignon (66) espacé dudit premier pignon (64) et lié en rotation avec ledit châssis (12), ledit deuxième pignon (66) étant en outre lié à ladite roue arrière (14),
une chaîne sans fin (68) ou courroie continue interliant lesdits premier et deuxième pignons (66) en une boucle pour transférer l'alimentation dudit bras de manivelle (60) à ladite roue arrière (14), et
un mécanisme d'entraînement (20) comprenant:
un bloc piles (84, 84') comportant un ou plusieurs éléments de batterie (22, 22') pour fournir ledit moteur électrique (18) avec de l'énergie électrique,
et
un support de batteries liant ledit bloc piles (84, 84') audit châssis (12), **caractérisé en ce que**
ledit support de batteries et ledit bloc piles (84, 84') positionnant un élément de batterie dudit un ou plusieurs éléments de batterie (22, 22') directement entre lesdits premier (64) et deuxième (66) pignons et dans les limites de la boucle de ladite chaîne sans fin (68) ou courroie continue, de manière à ce que ledit élément de batterie est positionné sur un point dans l'espace sur un segment de ligne allant d'un point sur le premier pignon (64) à un point sur le deuxième pignon (66).

2. Bicyclette à moteur électrique (10) selon la revendication 1, **caractérisée par** ledit support de batteries et ledit bloc piles (84, 84') positionnant ledit élément de batterie (22, 22') dudit un ou plusieurs éléments de batterie (22, 22') à proximité dudit premier pignon (64) et permettant simultanément audit bras de manivelle (60) de faire un tour complet.

3. Bicyclette à moteur électrique (10) selon l'une quelconques des revendications 1 à 2, **caractérisée en ce qu'**elle comprend en outre:
un premier connecteur électrique (90) en communication électrique avec ledit un ou plusieurs éléments de batterie (22, 22') pour recevoir de l'énergie électrique d'une source externe d'énergie électrique, et
une unité de gestion de batterie (88) pour le contrôle d'un chargement dudit un ou plusieurs éléments de batterie (22, 22') par de l'énergie électrique dudit connecteur électrique (90).

4. Bicyclette à moteur électrique (10) selon la revendication 3, **caractérisée en ce qu'**elle comprend en outre:
un capteur de rotation (204) pour déterminer une rotation ou non-rotation dudit premier pignon (64) et étant positionné audit premier pignon (64), et sur le côté opposé dudit premier pignon (64) dudit bras de manivelle (60).

5. Bicyclette à moteur électrique (10) selon la revendication 4, **caractérisée en ce que** ledit capteur de rotation (204) comprend:
un aimant permanent (216),
un support d'aimant (218) pour le montage dudit aimant (216) dans une position fixe par rapport audit premier pignon (64), et
un détecteur d'aimant (220) monté dans une position fixe par rapport audit châssis (12) pour détecter un changement de position dudit un ou plusieurs aimants (216) par rapport audit châssis (12).

6. Bicyclette à moteur électrique (10) selon la revendication 5, **caractérisée en ce que** ladite bicyclette à moteur électrique comprend:
un axe de rotation fixé audit premier pignon (64), et un roulement reliant ledit axe de rotation et ledit châssis (12) pour lier de manière rotationnelle ledit premier pignon (64) audit châssis (12), et ledit support d'aimant (218) étant monté rigidement directement sur ledit axe de rotation, et ledit support d'aimant (218) étant plat et définissant une première ouverture (222) pour permettre audit axe de rotation (298) de passer à travers ledit support d'aimant (218).

7. Bicyclette à moteur électrique (10) selon la revendication 6, **caractérisée en ce que** ledit support d'aimant (218) comprend un nombre de dents (226) dirigés vers le centre géométrique de ladite première ouverture (222) pour l'engrenage et le verrouillage sur ledit axe de rotation (208).

8. Bicyclette à moteur électrique (10) selon l'une quelconques des revendications 1 à 7, **caractérisée en ce qu'**elle comprend en outre:
une unité de contrôle (230) couplée audit bloc piles (84, 84') et ledit moteur électrique (18) pour le contrôle du fonctionnement de ladite bicyclette à moteur électrique (10), ladite unité de contrôle (230) comprenant:
une unité de gestion du moteur (228) couplée audit bloc piles (84, 84') et ledit moteur électrique (18) pour le contrôle de l'alimentation électrique dudit bloc piles (84, 84') audit moteur électrique (18) en fonction d'un signal de contrôle, et
un boîtier d'unité de contrôle acceuillant ladite unité de gestion du moteur (228) et étant positionné juxtaposé sur ledit premier pignon (64) et/ou audit premier pignon (64), et sur le côté opposé dudit pignon à partir dudit bras de manivelle (60).

9. Bicyclette à moteur électrique (10) selon la revendication 8, **caractérisée en ce que** ladite unité de contrôle (230) comprend en outre:
une unité de gestion de batterie (88), ladite unité de gestion de batterie (88) étant accueillie dans ledit boîtier d'unité de contrôle, ou préférablement, ladite unité de gestion de batterie (88) étant accueillie dans ledit bloc piles (84, 84').

10. Bicyclette à moteur électrique (10) selon l'une quelconques des revendications 5 à 7 en combinaison avec les revendications 8 à 9, **caractérisée en ce que** ladite unité de contrôle (230) comprend en outre:
ledit capteur de rotation (204), et ledit détecteur d'aimant (220) étant accueillis dans ledit boîtier d'unité de contrôle et/ou étant fixé sur ledit boîtier d'unité de contrôle.

11. Bicyclette à moteur électrique (10) selon l'une quelconques des revendications 1 à 10 **caractérisée en ce qu'**elle comprend en outre:
une protection enfermant au moins un segment de ladite chaîne sans fin (68) ou courroie continue.
